# EUROPEAN PATENT SPECIFICATION

(11) **EP 4 407 140 B1**
(45) Date of publication and mention of the grant of the patent: **12.11.2025**
(21) Application number: 23153494.2
(22) Date of filing: 26.01.2023
(51) Int. Cl.: E21B 7/02, G01S 17/08, G01S 17/894, G06T 7/70, E21B 19/18, E21D 9/00, E21D 20/00, G01S 17/06

(54) **CONTROLLING REPLACEMENT OF A MINING TOOL OF A MINING VEHICLE**
STEUERUNG DES AUSTAUSCHS EINES BERGBAUWERKZEUGS EINES BERGBAUFAHRZEUGS
COMMANDE DE REMPLACEMENT D'UN OUTIL D'EXPLOITATION MINIÈRE D'UN VÉHICULE D'EXPLOITATION MINIÈRE

(43) Date of publication of application: 31.07.2024
(73) Proprietor: Sandvik Mining and Construction Oy, 33330 Tampere (FI)
(72) Inventor: PESOLA, Mikko, 33311 Tampere (FI); PÄRSSINEN, Ville, 33311 Tampere (FI); AHOLA, Panu, 33311 Tampere (FI); MAKKONEN, Eero, 33311 Tampere (FI)
(74) Representative: Sandvik

(56) References cited:
- WO-A1-03/085233
- WO-A1-2009/156574
- WO-A1-2013/098460
- CN-A- 113 947 821
- US-A1- 2019 084 106

## Description

### TECHNICAL FIELD

Various example embodiments generally relate to the field of mining. Some example embodiments relate to controlling replacement of a mining tool of a mining vehicle.

### BACKGROUND

Mining vehicles may be configured to perform various tasks, such as for example drilling, bolting, injection, or grouting. It may be therefore desired to change mining tool(s) of the mining vehicle from time to time. And even though the mining vehicle were configured for a single task, it may be desired to change the type or size of a particular mining tool, for example to change a drill bit to a smaller one.

WO2013098460 discloses a method and a mining vehicle for post drilling insertion. A mining vehicle includes at least one boom provided with a post-drilling unit for feeding an insertion object into a pre-drilled hole. During drilling positioning data of the hole is gathered and stored in a control unit. The stored positioning data is used when rough positioning the post-drilling unit in a vicinity of the pre-drilled hole. The positioning also comprises a fine positioning wherein the hole collar is detected and the insertion device is driven from the vicinity to the collar.

WO03085233 discloses a method of localizing a hole drilled with a rock drilling machine comprising positioning a boom arranged on a rock drilling rig near the drilled hole with the aid of a positioning system arranged on the rock drilling rig, whereby a digital picture is created by means of a camera arranged on the boom, that a distance between the boom and the drilled hole is measured by means of a distance meter, that the digital picture is stored in a computer, that the stored picture is transformed to a picture containing only black and white parts, that the picture with only black and white parts is scanned to find a black part with size within a size interval corresponding to the drilled hole and that the position of the drill hole mouth in the room is determined with the aid of the position of the black part and the measured distance.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect, an apparatus for controlling a mining vehicle is disclosed. The apparatus may comprise: at least one processor; and at least one memory including computer program code, the at least one memory and the computer program code configured to, with the at least one processor, cause the apparatus at least to: control movement of a mining tool of the mining vehicle towards a mining tool magazine, wherein a light source is configured to emit light along a plane at a predetermined reference distance to the mining tool magazine; receive visual data comprising a representation of the mining tool; determine a distance between the mining tool and the mining tool magazine based on detecting, based on the visual data, illumination of a predetermined portion of the mining tool or the mining vehicle by the emitted light; monitor the distance between the mining tool and the mining tool magazine based on movement of at least one of the mining tool or the mining vehicle; and control replacement of at least a distal portion of the mining tool by another mining tool stored in the mining tool magazine based on the monitoring of the distance between the mining tool and the mining tool magazine.

According to a second aspect, a method for controlling a mining vehicle is disclosed. The method may comprise: controlling movement of a mining tool of the mining vehicle towards a mining tool magazine, wherein a light source is configured to emit light along a plane at a predetermined reference distance to the mining tool magazine; receiving visual data comprising a representation of the mining tool; determining a distance between the mining tool and the mining tool magazine based on detecting, based on the visual data, illumination of a predetermined portion of the mining tool or the mining vehicle by the emitted light; monitoring the distance between the mining tool and the mining tool magazine based on movement of at least one of the mining tool or the mining vehicle; and controlling replacement of at least a distal portion of the mining tool by another mining tool stored in the mining tool magazine based on the monitoring of the distance between the mining tool and the mining tool magazine.

According to a third aspect, an apparatus for controlling a mining vehicle is disclosed. The apparatus may comprise means for controlling movement of a mining tool of the mining vehicle towards a mining tool magazine, wherein a light source is configured to emit light along a plane at a predetermined reference distance to the mining tool magazine; means for receiving visual data comprising a representation of the mining tool; means for determining a distance between the mining tool and the mining tool magazine based on detecting, based on the visual data, illumination of a predetermined portion of the mining tool or the mining vehicle by the emitted light; means for monitoring the distance between the mining tool and the mining tool magazine based on movement of at least one of the mining tool or the mining vehicle; and means for controlling replacement of at least a distal portion of the mining tool by another mining tool stored in the mining tool magazine based on the monitoring of the distance between the mining tool and the mining tool magazine.

According to a fourth aspect, a computer program for controlling a mining vehicle is disclosed. The computer program may comprise instructions which, when executed by an apparatus, cause the apparatus at least to: control movement of a mining tool of the mining vehicle towards a mining tool magazine, wherein a light source is configured to emit light along a plane at a predetermined reference distance to the mining tool magazine; receive visual data comprising a representation of the mining tool; determine a distance between the mining tool and the mining tool magazine based on detecting, based on the visual data, illumination of a predetermined portion of the mining tool or the mining vehicle by the emitted light; monitor the distance between the mining tool and the mining tool magazine based on movement of at least one of the mining tool or the mining vehicle; and control replacement of at least a distal portion of the mining tool by another mining tool stored in the mining tool magazine based on the monitoring of the distance between the mining tool and the mining tool magazine.

According to a fifth aspect, a mining vehicle is disclosed. The mining vehicle may comprise the apparatus or computer program of the first, third, or fourth aspect.

According to a sixth aspect, a mining tool magazine is disclosed. The mining tool magazine may comprise: a light source configured to emit light along a plane at a predetermined reference distance to the mining tool magazine.

Example embodiments of the above aspects are described in the claims, the description, and/or the drawings. According to some aspects, there is provided the subject matter of the independent claims. Some further aspects are defined in the dependent claims. Many of the attendant features will be more readily appreciated as they become better understood by reference to the following description considered in connection with the accompanying drawings.

### LIST OF DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a mining vehicle;
FIG. 2 illustrates an example of a mining tool;
FIG. 3 illustrates an example of positioning a mining tool with respect to a mining tool magazine;
FIG. 4 illustrates an example of controlling movement of a mining tool towards a mining tool magazine;
FIG. 5 illustrates an example of illumination of a portion of a mining tool by a light source in front of a mining tool magazine;
FIG. 6 illustrates an example of a mining tool magazine comprising a light source;
FIG. 7 illustrates an example of an apparatus configured to practise one or more example embodiments; and
FIG. 8 illustrates an example of a method for controlling a mining vehicle.

Like references are used to designate like parts in the accompanying drawings.

### DESCRIPTION

Reference will now be made to embodiments, examples of which are illustrated in the accompanying drawings. The description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

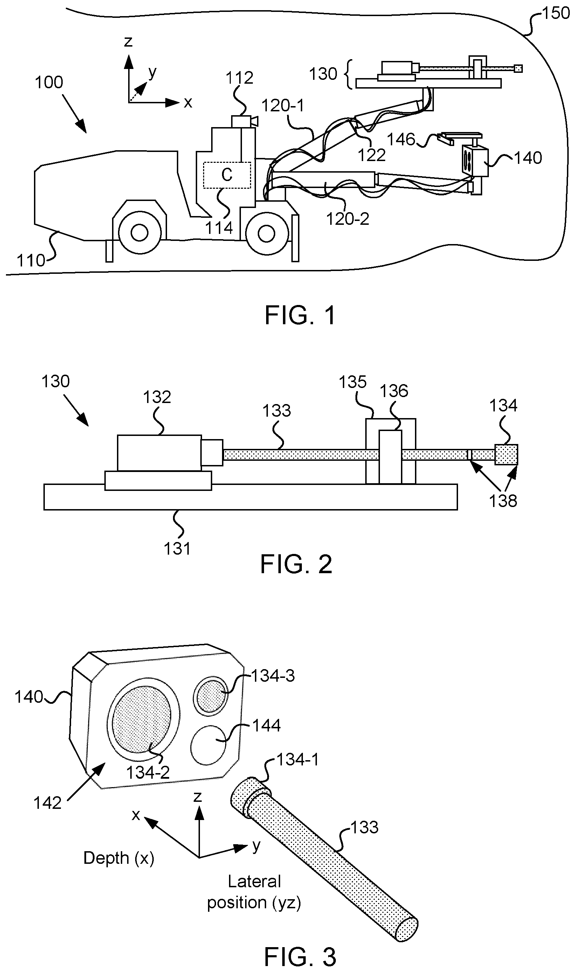

FIG. 1 illustrates an example of a mining vehicle. Mining vehicle 100 may comprise a multi-function vehicle, which may be configured to perform multiple tasks, such as for example drilling, bolting, injection, or grouting. Mining vehicle 100 may be alternatively configured to perform a single task, for example one of the tasks listed above. Even though some example embodiments have been described using drilling as an example of a task of mining vehicle 100, it is appreciated that the example embodiments may be applied to various other mining-related tasks, and tools associated therewith.

Mining vehicle 100 may be an automated mining vehicle, for example an automated mining vehicle equipped with tools configured for drilling, bolting, injecting, or grouting. An automated mining vehicle operating in an automatic mode may be configured to, for example, receive a task to be performed, perceive the environment of the automated mining vehicle, determine appropriate tool(s) for performing the task, and/or perform the task while taking the environment into account. An automated mining vehicle operating in an automatic mode may be configured to operate independently but may be taken under external control at certain operation areas or conditions, such as during states of emergencies. Example embodiments may be, however, applied also in non-autonomous or semiautonomous mining vehicles, for example remote-controlled mining vehicles.

In the example of FIG. 1, axis x represents the forward driving direction of mining vehicle 100. Axis z represents the vertical direction, in this example towards the roof of the tunnel. Mining vehicle 100 may comprise a movable carrier 110 and at least one boom 120 connected to movable carrier 110. Movable carrier 110 may comprise equipment for moving or stabilising mining vehicle 100, such as for example a motor, wheels, or stabilizer jacks. Movable carrier 110 may be configured to move autonomously or it may be controlled by a human operator, either remotely or locally at mining vehicle 100. Even though two booms 120-1, 120-2 have been illustrated in FIG. 1, mining vehicle 100 may generally comprise one or a plurality (e.g., two, three, four,...) of booms 120. Boom 120-1 may be referred to as a first boom. Boom 120-2 may be referred to as a second boom.

A mining tool may be coupled to a distal end portion of boom 120-1. A mining tool may comprise a tool configured to be used for any mining application, for example drilling holes for explosives, placing explosives in the holes, bolting, injection, grouting, mesh installation, or the like. In this example, drilling unit 130 represents the mining tool, but functionality described with reference to drilling unit 130, or components thereof, may be applied to other type of mining tools as well. One example of a drilling unit is provided in FIG. 2, but in general, drilling unit 130 may comprise a feeding system configured to keep a drill bit in contact with the drilling face of tunnel 150 and to enable a drill rod to move along a feed beam during drilling. Boom(s) 120-1, 120-2 may comprise a plurality of boom parts coupled to each other, movable carrier 110, and/or drilling unit 130 by joint(s) 122. Controllable joints enable drilling unit 130 to be placed at a desired position and orientation with respect to the drilling face.

Mining vehicle 100 may comprise a mining tool magazine 140. Mining tool magazine 140 may be configured to at least temporarily store one or more mining tools, for example mining tools configured to be used by mining vehicle 100 to perform particular phases in underground mining. Mining tool magazine 140 may comprise one or more slots for storing respective mining tool(s). In the example of FIG. 1, mining tool magazine is illustrated to be held by second boom 120-2, but it is noted that mining tool magazine 140 may be located at any suitable position, for example coupled to movable carrier 110 or other part of mining vehicle 100, located at another mining vehicle, attached to a wall of tunnel 150, or located elsewhere outside mining vehicle 100. In some example embodiments, mining tool magazine 140 might not be fixedly coupled to mining vehicle 100, e.g., second boom 120-2, but mining vehicle 100 may be configured to grip and hold mining tool magazine 140 whenever it is desired to change a mining tool. This enables boom 120-2 to be used also for other purposes, such as for example drilling.

Mining vehicle 100 may comprise at least one visual sensor 112 configured to capture visual data representing the environment of mining vehicle 100. Visual sensor 112 may include a camera, such as for example a visible light camera and/or a non-visible light camera (e.g., an infrared (IR) camera or an ultraviolet (UV) camera). Such cameras may be configured to capture still images or video data which may comprise multiple video frames. Visual sensor 112 may be configured to generate (digital) visual data that comprises a representation of the environment captured by visual sensor 112. It is noted that term 'visual' should not be limited to what is observable by a human eye, but rather generally as comprising any type of light observable by visual sensor 112, including for example infrared and ultraviolet light. Mining vehicle 100 may also comprise other type of sensor(s), such as radio detection and ranging (radar) sensor(s) and/or light detection and ranging (lidar) sensor(s).

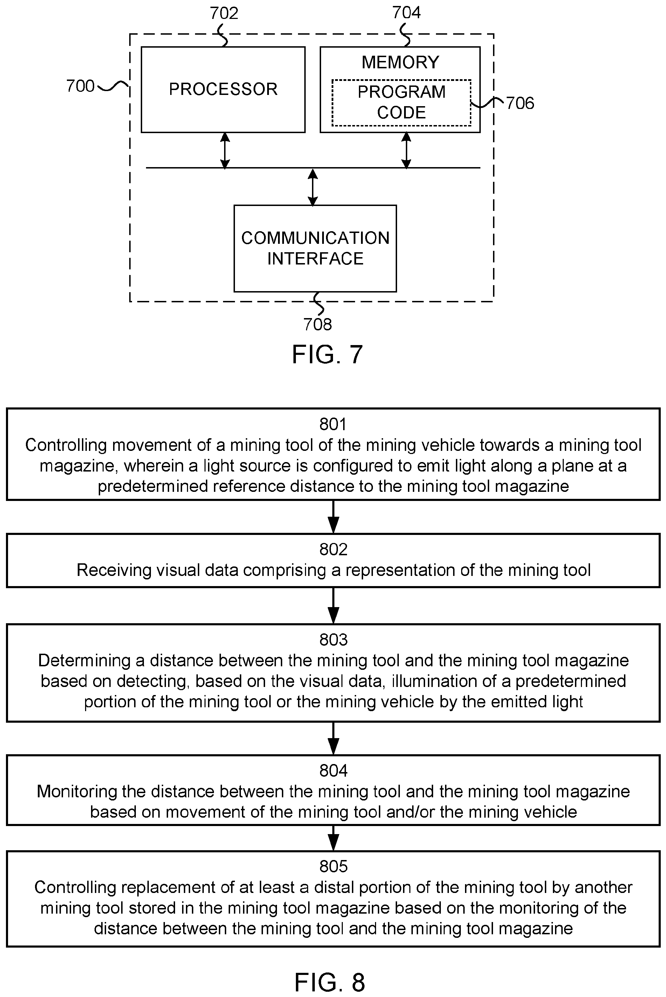

Mining vehicle 100 may comprise a controller (C) 114. Controller 114 may be for example provided as a software application residing on a memory and being executable by a processor. An example of an apparatus suitable for implementing controller 114 is provided in FIG. 7. Controller 114 may comprise, or be communicatively coupled to, various functions, blocks, or applications for implementing functionality of controller 114. Controller 114 may be configured to control replacement of mining tool(s), or a distal end portion thereof, such as for example component(s) of drilling unit 130. Controlling replacement of a mining tool, or a portion thereof, may comprise controlling movement of boom(s) 120-1, 120-2 such that the currently installed mining tool, or portion thereof, is released and a new mining tool, or portion thereof, is attached to boom 120-1.

Controlling the replacement of the mining tool may be based on monitoring the distance between the mining tool and mining tool magazine 140. For example, controller 114 may be configured to cause the mining tool, or portion thereof, to be released to an empty slot of mining tool magazine 140 when the current distance to mining tool magazine reaches a threshold. The distance may be negative when the mining tool is at least partially located inside mining tool magazine 140. The threshold may be therefore also negative. Controller 114 may be configured to monitor the distance between the mining tool and mining tool magazine by tracking movement of the mining tool with respect to a reference location detected based on illumination of a predetermined portion of the mining tool or mining vehicle 100, as will be further described below. Controller 114 may be however configured to control the lateral position of the mining tool based on visual data captured by visual sensor 112.

Controller 114 may be configured to receive or store a 3D model of at least one component of mining vehicle 100 (e.g., a 3D model of boom(s) 120-1, 120-2, mining tools associated therewith, and/or a kinematic model of mining vehicle 100 or component(s) thereof. Controller 114 may be configured to use the kinematic model for example to control movement of drilling unit 130 or another mining tool. A 3D model of a component of mining vehicle 100 may comprise 3D geometry data of the component, obtained for example from a computer aided design (CAD) model of the respective physical component. A component of mining vehicle 100, e.g., mining tool, may be configured with a predetermined portion (e.g., reference portion) configured for distance detection based on detecting illumination of that portion by light source 146. The predetermined portion may be visually recognizable based on the visual data captured by visual sensor 112. Controller 114 may be configured to receive the visual data and to detect illumination of the predetermined portion. Controller 114 may be configured to receive the visual data from visual sensor 112 directly or via one or more intermediate processing devices or functions.

A kinematic model of mining vehicle 100, or component(s) thereof, may comprise a mathematical description of at least a part of mining vehicle 100. A kinematic model may describe motion of mining vehicle 100 or component(s) of mining vehicle 100 without taking into account the forces that cause the motion. The kinematic model may be used for estimating or simulation of a position of mining vehicle 100 or component(s) of mining vehicle 100, for example based on measurement data from one or more sensors associated with mining vehicle 100 or motion of mining vehicle 100 caused, or to be caused, by given control inputs. The kinematic model may comprise information on dimensions of boom(s) 120-1, 120-2, parts thereof, or mining tools configured to be attached to the boom(s) 120-1, 120-2, characteristics of joint(s) 122 (e.g., their degrees of freedom), constraints between moving parts of mining vehicle 100, or the like. The kinematic model may thus enable modelling or tracking movement of the component(s) of mining vehicle 100, for example to determine and track position of the mining tool. The 3D model(s) of the component(s) may be provided as point cloud data indicative of the surface of the component(s). Point cloud data may comprise a plurality of data points representing, for example, distances between mining vehicle 100 and its component(s) or other objects (e.g., mining tool magazine 140) in the environment of mining vehicle, for example at a particular time instance. An individual point included in a point cloud may be presented by, for example, x and y coordinates, or *x, y,* and *z* coordinates with respect to a particular coordinate frame (e.g., a coordinate frame fixed to mining vehicle 100).

Mining vehicle 100 may be controlled by a control device (not shown), which may be external to mining vehicle 100. The remote control device may be for example a server located remote from mining vehicle, for example outside the tunnel. Functionality of controller 114 may be provided at mining vehicle 100, the remote control device, or distributed between mining vehicle 100 and the remote control device. Information may be exchanged between remote control device and mining vehicle 100 over a communication interface including any suitable wireless or wired connection. Examples of suitable communication interfaces are described with reference to FIG. 7.

FIG. 2 illustrates an example of a mining tool. In this example, drilling unit 130 represents the mining tool. Drilling unit 130 may comprise a feed beam 131 and a rock drilling machine 132 supported on it. The rock drilling machine 132 may comprise a shank at a front end of the rock drilling machine 132 for connecting a tool, such as for example drill rod 133 comprising, or configured to be coupled to, drill bit 134. Drill bit may be alternatively called a drill crown. Drill rod 133, and drill bit, or their combination, are provided as examples of mining tools. Further, drilling unit 130 may comprise one or more rod handling devices 135, such as for example a tool hold device, a tool changing apparatus or manipulator. In addition to this, one or more additional devices 136 may be supported to the feed beam 131. The 3D model of the at least one component of mining vehicle 100 may comprise 3D models of any of the above described components of drilling unit 130. It is however noted that a 3D model of a component of mining vehicle 100 need not be an accurate 3D model of the component. For example, approximate 3D model(s) may be used to represent approximate dimensions of the component(s) for the purpose of tracking distance between a mining tool, e.g., drill bit 134, and mining tool magazine 140. This may reduce computational complexity, while still providing sufficient accuracy.

As discussed above, a component of mining vehicle 100 may be configured with a predetermined portion for distance detection based on detecting illumination of that portion. For example, drilling unit 130 may comprise a predetermined portion that is visually recognizable based on visual data captured by visual sensor 112. In this example, two visually recognizable portions 138 are described as examples of the predetermined portion. A visually recognizable portion may be for example located within the length of drill rod 133 (cf. the white marker on drill rod 133). Alternatively, or additionally, a visually recognizable portion may be the distal end of drill bit 134. In general, any visually recognizable portion of a mining tool or mining vehicle 110 may used. Examples of visually recognizable portion include particular shapes of portions of the mining tool or mining vehicle 100, or visual markers (e.g., labels) provided thereon.

Visually recognizable portion 138 may have a known spatial relationship with the mining tool (e.g., fixed or derivable based on the kinematic model) or a known position within the mining tool such that controller 114 is enabled to determine a position of the mining tool, or particular part thereof (e.g., drill bit 134), based on the position of visually recognizable portion 138. This enables controller 114 to track position of the mining tool after detecting the visually recognizable portion to coincide with a known reference location, e.g., a plane illuminated by light source 146. For example, controller 114 may be configured to track distance of the mining tool to mining tool magazine 140 after detecting the predetermined portion to be at a known reference distance to mining tool magazine 140.

FIG. 3 illustrates an example of positioning a mining tool with respect to a mining tool magazine. In this example, the mining tool is represented by drill bit 134-1. Optionally, drill rod 133 may be considered to be part of the mining tool. In this example, mining tool magazine 140 comprises a drilling tool magazine, but in general mining tool magazine 140 may be configured to store any suitable type of mining tool(s), such as for example bolting tool(s), injection tool(s), or grouting tool(s). Mining tool magazine 140 may therefore comprise a drilling tool magazine, a bolting tool magazine, an injection magazine, or a grouting tool magazine. Mining tool magazine 140 may be also embodied as a multi-purpose mining tool magazine configured to store two or more of different types of mining tools.

At least one side 142 of mining tool magazine 140 may be configured to enable access to mining tool(s) configured to be stored at mining tool magazine 140, or to an empty slot 144 of mining tool magazine 140. When controlling replacement of a mining tool, it may be relatively easy to control the lateral position of the mining tool, e.g., position of drill bit 134-1 at the yz-plane, based on visual data captured by visual sensor 112, for example if the mining tool is located between mining tool magazine 140 and visual sensor 112. It may be however more challenging to accurately determine the position of the mining tool at the depth direction (x). For example, it may be relatively easy to laterally align drill bit 134-1 with empty slot 144 of mining tool magazine 140, but it may be relatively hard to determine when drill bit 134-1 is at a suitable position along axis x (depth) to release drill bit 134-1 at empty slot 144. Similarly, it may be relatively easy to laterally align drill rod 133 with drill bit 134-2 or 134-3, but it may be relatively hard to determine when drill rod 133 is at a suitable position along axis x (depth) to be attached to drill bit 134-2 or 134-3. It is noted that the xyz-axes of FIG. 3 may or may not be aligned with corresponding axes of FIG. 1.

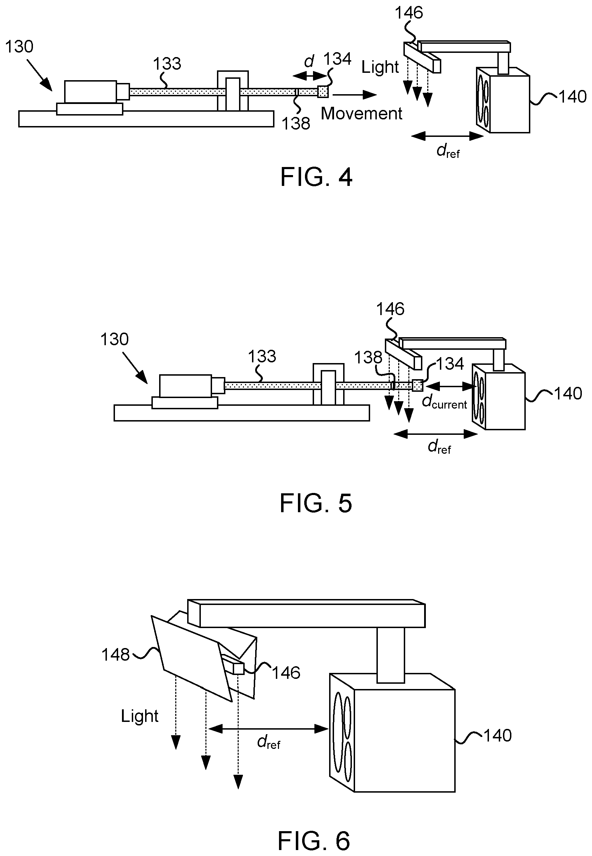

FIG. 4 illustrates an example of controlling movement of a mining tool towards a mining tool magazine. Drill bit 134, drill rod 133, or their combination may again represent the mining tool. Controller 114 may be configured to control movement of drill rod 133 and drill bit 134 towards mining tool magazine 140, for example by means of providing control instructions to cause movement or boom(s) 120-1, 120-2. In this example, drill rod 133 comprises a visually recognizable portion 138 at a known position with respect to drill bit 134. For example, the distance (d) between visually recognizable portion 138 and the distal end of drill bit 134 may be known. Controller 114 may be configured to receive visual data comprising a representation of drill rod 133, in particular visually recognizable portion 138, for example from visual sensor 112.

Mining tool magazine 140 may comprise or be associated with light source 146. Light source 146 may be configured to emit light at a predetermined reference distance (*d_{ref}*) to the mining tool magazine. This enables controller 114 to determine the distance of the recognizable portion, and thereby also any part of the mining tool, to mining tool magazine 140, based on detecting when recognizable portion 138 is illuminated by light source 146.

Light source 146 may be configured to emit the light along a plane. This enables same light source 146 to be used for targeting different slots or tools of mining tool magazine 140. It is noted that light source 146 need not emit light at all points of the plane. Light source 146 may be for example configured to emit discrete (e.g., parallel) rays along the plane. This reduces power consumption of light source 146. Distance(s) between parallel rays may be configured such that the mining tool is configured not to pass the plane without being at least partially illuminated. Distance(s) between the rays may be for example configured to be smaller that the width or diameter of the mining tool. The width or diameter may be measured along the plane of emitted light, but with respect to an axis perpendicular to the propagation direction of the discrete rays.

The plane may be (substantially) parallel to the mining tool magazine, for example (substantially) parallel to a side that is configured to enable access to mining tool(s) configured to be stored in mining tool magazine 140. This enables the same reference distance to be used when targeting different slots or tools of mining tool magazines, or in general for different lateral positions of the mining tool. Light source 146 may be configured to emit light along the plane such that the "curtain" of emitted light has certain depth in the direction of movement of the mining tool.

FIG. 5 illustrates an example of illumination of a portion of a mining tool by a light source in front of a mining tool magazine. In FIG. 5, drilling unit 130 including drill bit 134 and drill rod 133 has moved towards mining tool magazine 140 such that visually recognizable portion 138 is currently illuminated by light source 146. Controller 114 may be configured to detect illumination of visually recognizable portion 138 based on visual data captured and provided by visual sensor 112. For example, a computer vision algorithm of controller 114 may be configured to recognize when the representation of visually recognizable portion 138, as represented in the visual data, is illuminated. Controller 114 may be configured to determine a current distance (*d_{current}*) of drill bit 134 from mining tool magazine 140, in response to detecting illumination of visually recognizable portion 138. For example, controller 114 may be configured to determine the current distance based on the predetermined reference distance and the distance between visually recognizable portion 138 and the distal end of drill bit 134, for example by *d_{current} = d_{ref}* - *d*. When the distal end of drill bit 134 is configured as the visually recognizable portion, distance *d* may be equal to zero and controller 114 may be configured to determine the current distance to be equal to the predetermined reference distance (*d_{current} = d_{ref}*).

Controller 114 may be configured to monitor the distance (*d_{current}*) between drill bit 134 and mining tool magazine 140 based on movement of drill bit 134 and/or mining vehicle 100. For example, controller 114 may be configured to track movement of drill bit 134 with respect to mining tool magazine 140. This may be based on the kinematic model of mining vehicle 100, measurement data from one or more sensors associated with mining vehicle 100, and/or motion of mining vehicle 100 (e.g., movable carrier 110) caused by given control inputs.

The distance (*d_{current}*) between the mining tool (e.g., drill bit 134) and mining tool magazine 140 may be a distance between any suitable parts of the mining tool and mining tool magazine. For example, the distance (*d_{current}*) may be a distance between drill bit 134 and the front side of mining tool magazine, a distance between drill bit 134 and a desired release distance for releasing drill bit 134 at mining tool magazine, or a distance between drill rod 133 and a desired attachment distance for attachment of a new drill bit stored at mining tool magazine. In the latter case, controller 114 may be configured to determine the position of the distal end of drill rod 133 based on distance between the distal end of drill rod 133 and the distal end of drill bit 134, which may be known and fixed.

It is again noted that drill bit 134, drill rod 133, drilling unit 130, or any combination of two or more of them, are provided as examples of mining tools. In general, distance *d_{current}* may correspond to a distance between a mining tool and mining tool magazine 140. Controller 114 may be configured to control replacement of at least a distal portion of the mining tool (e.g., drill bit 134 when the mining tool comprises both drill rod 133 and drill bit 134) by another mining tool stored in mining tool magazine 140. Controller 114 may be configured to control the replacement based on monitoring of the distance between the mining tool and mining tool magazine 140, for example as described above using drill bit 134 as an example.

It is noted that also visual sensor 112 may be configured to extract depth information of object(s), such as for example drill bit 134 and mining tool magazine 140, for example by comparing two images taken at slightly different positions (e.g., by two camera units of visual sensor 112). Alternatively, mining vehicle 100 may comprise a time-of-flight (ToF) camera, which may be configured to determine a distance between the camera and points of the object(s) by measuring a round-trip time of an artificial light signal provided by a laser or a light-emitting diode (LED). A lidar sensor may be configured to determine a distance to different points of the object(s) by targeting the object(s) with a laser and measuring the time for the reflected light to return to a receiver of the lidar sensor. A radar sensor may be configured to transmit electromagnetic energy towards the object(s) and to observe the echoes returned from the object(s) to determine distances to different points of the object(s). Controller 114 may be configured to use such auxiliary distance detection means to provide a coarse estimate of the distance between the mining tool and mining tool magazine 140, for example in order to control placement of the mining tool near the light source 146. However, since accuracy of such coarse distance detection methods may not be sufficient for controlling replacement of the mining tool, controller 114 may be configured to subsequently detect the distance based on the illumination of the predetermined portion to obtain a more accurate estimate of the distance.

FIG. 6 illustrates an example of a mining tool magazine comprising a light source. As already describe above, mining tool magazine 140 may comprise light source 146, which may be configured to emit light at a predetermined reference distance (*d_{ref}*) to mining tool magazine 140, for example along a plane. The plane may be (substantially) parallel to a side of the mining tool magazine that is configured to enable access to mining tool(s) configured to be stored in mining tool magazine 140.

Light source 146 may be configured to emit visible light or invisible light, such as for example IR light or UV light. Using invisible light may improve detecting illumination of the predetermined portion (e.g., visually recognizable portion 138), because visual sensor 112 may be configured to detect invisible light and not to detect visible light. This provides the benefit of avoiding disturbance caused by visible light sources in the environment of mining tool magazine. Alternatively, the colour of the emitted light may be different from a colour of the predetermined portion of the mining tool or mining vehicle 100. This helps to detect illumination of the predetermined portion. For example, visual sensor 112, any processing device or function associated therewith, or controller 114, may be configured to filter out one or more colour(s), e.g., range(s) of wavelengths, different from the colour of the emitted light, so as to improve detecting the illumination.

Mining tool magazine 140 may comprise a lightshade 148 configured to collimate the emitted light such that the light is emitted along the plane in front of mining tool magazine 140. Lightshade 148 may for example comprise shades at two sides of an elongated light source such that light is enabled to exit lightshade 148 from a linear slit between the two shades. Collimated light may comprise substantially parallel rays propagating in the same direction. It is noted that the emitted light may be collimated by any suitable means, such as for example an optical collimator.

FIG. 7 illustrates an example of an apparatus configured to practise one or more example embodiments. Apparatus 700 may be or comprise a mining vehicle control apparatus, such as for example a server, communicatively coupled to mining vehicle 100, a control apparatus located at mining vehicle 100, controller 114, mining vehicle 100 itself, or in general any device or system configured to implement the functionality described herein. Although apparatus 700 is illustrated as a single device, it is appreciated that, wherever applicable, functions of apparatus 700 may be distributed to a plurality of devices.

Apparatus 700 may comprise at least one processor 702. The at least one processor 702 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a specialpurpose computer chip, or the like.

Apparatus 700 may further comprise at least one memory 704. The at least one memory 704 may be configured to store, for example, computer program code or the like, for example operating system software and application software. The at least one memory 704 may comprise one or more volatile memory devices, one or more non-volatile memory devices, and/or a combination thereof. For example, the memory may be embodied as magnetic storage devices (such as hard disk drives, etc.), optical magnetic storage devices, or semiconductor memories (such as mask ROM, PROM (programmable ROM), EPROM (erasable PROM), flash ROM, RAM (random access memory), etc.). Memory 704 is provided as an example of a (non-transitory) computer readable medium. The term "non-transitory," as used herein, is a limitation of the medium itself (i.e., tangible, not a signal ) as opposed to a limitation on data storage persistency (e.g., RAM vs. ROM). The at least one memory 704 may be also embodied separate from apparatus 700, for example as a computer readable (storage) medium, examples of which include memory sticks, compact discs (CD), or the like.

When apparatus 700 is configured to implement some functionality, some component and/or components of apparatus 700, such as for example the at least one processor 702 and/or the at least one memory 704, may be configured to implement this functionality. Furthermore, when the at least one processor 702 is configured to implement some functionality, this functionality may be implemented using program code 706 comprised, for example, in the at least one memory 704.

The functionality described herein may be performed, at least in part, by one or more computer program product components such as software components. According to an example embodiment, apparatus 700 comprises a processor or processor circuitry, such as for example a microcontroller, configured by the program code 706, when executed, to execute the embodiments of the operations and functionality described herein. Program code 706 is provided as an example of instructions which, when executed by the at least one processor 702, cause performance of apparatus 700.

For example, controller 114 may be at least partially implemented as program code configured to cause apparatus 700 to perform functionality of controller 114. Similarly, transmission or reception of data (e.g., sensor data or kinematic model(s)) over an internal or external communication interface of mining vehicle 100 may be controlled by software.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), neural processing unit (NPU), tensor processing unit (TPU), or the like.

Apparatus 700 may comprise a communication interface 708 configured to enable apparatus 700 to transmit and/or receive information. Communication interface 708 may comprise an internal or external communication interface, such as for example a radio interface between mining vehicle 100 and a remote control device. Apparatus 700 may further comprise other components and/or functions such as for example a user interface (not shown) comprising at least one input device and/or at least one output device. The input device may take various forms such as a keyboard, a touch screen, or one or more embedded control buttons. The output device may for example comprise a display, a speaker, or the like. The user interface may enable a human operator to monitor various functions and data, such as for example mining tool(s) currently installed on mining vehicle 100, mining tool(s) stored at mining tool magazine 140, or the like.

Apparatus 700 may be configured to perform or cause performance of any aspect of the method(s) described herein. Further, a computer program or a computer program product may comprise instructions for causing, when executed by apparatus 700, apparatus 700 to perform any aspect of the method(s) described herein. Further, apparatus 700 may comprise means for performing any aspect of the method(s) described herein. In one example, the means comprises the at least one processor 702, the at least one memory 704 including program code 706 (instructions) configured to, when executed by the at least one processor 702, cause apparatus 700 to perform the method(s). In general, computer program instructions may be executed on means providing generic processing functions. Such means may be embedded for example in a computer, a server, or the like. The method(s) may be thus computer-implemented, for example based algorithm(s) executable by the generic processing functions, an example of which is the at least one processor 702. Apparatus 700 may comprise means for transmitting or receiving information, for example one or more wired of wireless (e.g., radio) transmitters or receivers, which may be coupled or be configured to be coupled to one or more antennas, or transmitter(s) or receiver(s) of a wired communication interface. FIG. 8 illustrates an example of a method for controlling a mining vehicle.

According to a first aspect, an apparatus for controlling a mining vehicle is disclosed. The apparatus may comprise: at least one processor; and at least one memory including computer program code, the at least one memory and the computer program code configured to, with the at least one processor, cause the apparatus at least to: control movement of a mining tool of the mining vehicle towards a mining tool magazine, wherein a light source is configured to emit light along a plane at a predetermined reference distance to the mining tool magazine; receive visual data comprising a representation of the mining tool; determine a distance between the mining tool and the mining tool magazine based on detecting, based on the visual data, illumination of a predetermined portion of the mining tool or the mining vehicle by the emitted light; monitor the distance between the mining tool and the mining tool magazine based on movement of the mining tool and/or the mining vehicle; and control replacement of at least a distal portion of the mining tool by another mining tool stored in the mining tool magazine based on the monitoring of the distance between the mining tool and the mining tool magazine.

According to an example embodiment of the first aspect, the mining vehicle comprises a drill rig, or the mining tool magazine comprises a drilling tool magazine, or the mining tool or the other mining tool comprises at least one of the following: a drill crown, a drill bit, or a drill rod.

According to an example embodiment of the first aspect, the mining tool comprises a bolting tool, an injection tool, or a grouting tool.

According to an example embodiment of the first aspect, the predetermined portion of the mining tool comprises a distal end portion of the mining tool.

According to an example embodiment of the first aspect, the predetermined portion of the mining tool or the mining vehicle comprises a visually recognizable portion of the mining tool or the mining vehicle.

According to an example embodiment of the first aspect, the light source comprises a lightshade configured to collimate the light along the plane.

According to an example embodiment of the first aspect, the light source is configured to emit the light in front of a side of the mining tool magazine configured to enable access to at least one mining tool configured to be stored in the mining tool magazine.

According to an example embodiment of the first aspect, plane is substantially parallel to the side of the mining tool magazine configured to enable access to the at least one mining tool configured to be stored in the mining tool magazine.

According to an example embodiment of the first aspect, the emitted light comprises invisible light, infrared light, or ultraviolet light, or wherein a colour of the emitted light is different from a colour of the predetermined portion of the mining tool or the mining vehicle.

According to an example embodiment of the first aspect, the computer program code is further configured to, with the at least one processor, cause the apparatus to: receive the visual data from a camera of the mining vehicle.

FIG. 8 illustrates an example of a method for controlling a mining vehicle, according to a second aspect of the present disclosure. The method may comprise a computer-implemented method performed by, for example, apparatus 700 such as controller 114.

At 801, the method may comprise controlling movement of a mining tool of the mining vehicle towards a mining tool magazine, wherein a light source is configured to emit light along a plane at a predetermined reference distance to the mining tool magazine.

At 802, the method may comprise receiving visual data comprising a representation of the mining tool.

At 803, the method may comprise determining a distance between the mining tool and the mining tool magazine based on detecting, based on the visual data, illumination of a predetermined portion of the mining tool or the mining vehicle by the emitted light.

At 804, the method may comprise monitoring the distance between the mining tool and the mining tool magazine based on movement of the mining tool and/or the mining vehicle.

At 805, the method may comprise controlling replacement of at least a distal portion of the mining tool by another mining tool stored in the mining tool magazine based on the monitoring of the distance between the mining tool and the mining tool magazine.

The method may be performed by apparatus 700, controller 114, mining vehicle 100, or a remote control device of mining vehicle 100, for example based on program code 706, when executed by processor 702. Various examples of the methods are explained above with regard to functionalities of controller 114 and/or mining vehicle 100. It should be understood that example embodiments described may be combined in different ways unless explicitly disallowed.

According to an example embodiment of the second aspect, the mining vehicle comprises a drill rig, or the mining tool magazine comprises a drilling tool magazine, or the mining tool or the other mining tool comprises at least one of the following: a drill crown, a drill bit, or a drill rod.

According to an example embodiment of the second aspect, the mining tool comprises a bolting tool, an injection tool, or a grouting tool.

According to an example embodiment of the second aspect, the predetermined portion of the mining tool comprises a distal end portion of the mining tool.

According to an example embodiment of the second aspect, the predetermined portion of the mining tool or the mining vehicle comprises a visually recognizable portion of the mining tool or the mining vehicle.

According to an example embodiment of the second aspect, the light source comprises a lightshade configured to collimate the light along the plane.

According to an example embodiment of the second aspect, the light source is configured to emit the light in front of a side of the mining tool magazine configured to enable access to at least one mining tool configured to be stored in the mining tool magazine.

According to an example embodiment of the second aspect, plane is substantially parallel to the side of the mining tool magazine configured to enable access to the at least one mining tool configured to be stored in the mining tool magazine.

According to an example embodiment of the second aspect, the emitted light comprises invisible light, infrared light, or ultraviolet light, or wherein a colour of the emitted light is different from a colour of the predetermined portion of the mining tool or the mining vehicle.

According to an example embodiment of the second aspect, the computer program code is further configured to, with the at least one processor, cause the apparatus to: receive the visual data from a camera of the mining vehicle.

According to a third aspect, an apparatus may comprise means for performing the method according to the second aspect, or any example embodiment(s) thereof.

According to a fourth aspect, a computer program, a computer program product, or a (non-transitory) computer-readable medium may comprise instructions which, when executed by an apparatus, cause the apparatus at least to perform the method according to the second aspect, or any example embodiment(s) thereof.

According to a fifth aspect a mining vehicle is disclosed. The mining vehicle may comprise the apparatus according to the first or third aspect, or any example embodiment thereof, or the computer program according to the fourth aspect.

According to an example embodiment of the fifth aspect, the mining vehicle comprises or is configured to hold the mining tool magazine.

According to an example embodiment of the fifth aspect, the mining the mining vehicle comprises a drill rig, or the mining tool magazine comprises a drilling tool magazine, or the mining tool or the other mining tool comprises at least one of the following: a drill crown, a drill bit, or a drill rod.

According to a sixth aspect, a mining tool magazine is disclosed. The mining tool magazine may comprise a light source configured to emit light along a plane at a predetermined reference distance to the mining tool magazine.

According to an example embodiment of the sixth aspect, the emitted light comprises invisible light, infrared light, or ultraviolet light, or a colour of the emitted light is different from a colour of a predetermined portion of a mining tool or a mining vehicle, wherein the mining vehicle is configured to replace the mining tool with another mining tool configured to be stored in the mining tool magazine.

According to an example embodiment of the sixth aspect, the light source comprises a lightshade configured to collimate the light along the plane.

According to an example embodiment of the sixth aspect, the light source is configured to emit the light in front of a side of the mining tool magazine configured to enable access to at least one mining tool configured to be stored in the mining tool magazine.

According to an example embodiment of the sixth aspect, the plane is substantially parallel to the side of the mining tool magazine configured to enable access to the at least one mining tool configured to be stored in the mining tool magazine.

According to an example embodiment of the sixth aspect, the mining tool magazine comprises a drilling tool magazine, a bolting tool magazine, an injection tool magazine, or grouting tool magazine, or the mining tool comprises a drilling tool, a bolting tool, an injection too, or a grouting tool.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought

The term 'comprising' is used herein to mean including the method, blocks, or elements identified, but that such blocks or elements do not comprise an exclusive list and a method or apparatus may contain additional blocks or elements

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Term "or" may be understood to cover also a case where both of the items separated by "or" are included. Hence, "or" may be understood as an inclusive "or" rather than an exclusive "or"

Although subjects may be referred to as 'first' or 'second' subjects, this does not necessarily indicate any order or importance of the subjects. Instead, such attributes may be used solely for the purpose of making a difference between subjects

It will be understood that the above description is given by way of example only and that various modifications may be made by those skilled in the art. The above specification, examples and data provide a complete description of the structure and use of exemplary embodiments. The scope of protection is defined in the appended claims.

## Claims

1. An apparatus (100, 114, 700) for controlling replacement of a mining tool of a mining vehicle (100), the apparatus (100, 114, 700) comprising:
at least one processor (702);
and at least one memory (704) including computer program code (706), the at least one memory (704) and the computer program code (706) configured to, with the at least one processor (702), cause the apparatus (100, 114, 700) at least to:
control movement of a mining tool of the mining vehicle (100) towards a mining tool magazine (140), wherein a light source (146) is configured to emit light along a plane at a predetermined reference distance (*d_{ref}*) to the mining tool magazine (140);
receive, from a visual sensor (112), visual data comprising a representation of the mining tool;
determine a distance between the mining tool and the mining tool magazine (140) based on detecting, based on the visual data, illumination of a predetermined portion of the mining tool or the mining vehicle (100) by the emitted light;
monitor the determined distance between the mining tool and the mining tool magazine (140) based on movement of at least one of the mining tool or the mining vehicle (100) with respect to the mining tool magazine (140); and
control replacement of at least a distal portion of the mining tool by another mining tool stored in the mining tool magazine (140) based on the monitoring of the distance between the mining tool and the mining tool magazine (140).

2. The apparatus (100, 114, 700) according to claim 1, wherein the predetermined portion of the mining tool or the mining vehicle (100) comprises a distal end portion of the mining tool, or wherein the predetermined portion of the mining tool or the mining vehicle (100) comprises a visually recognizable portion (138) of the mining tool or the mining vehicle (100).

3. The apparatus (100, 114, 700) according to claim 1 or 2, wherein the at least one memory (704) and computer program code (706) are further configured to, with the at least one processor (702), cause the apparatus (100, 114, 700) to detect the illumination of the predetermined portion of the mining tool or the mining vehicle (100) by the emitted light in front of a side of the mining tool magazine (140) configured to enable access to at least one mining tool configured to be stored in the mining tool magazine (140).

4. The apparatus (100, 114, 700) according to claim 3, wherein the plane is substantially parallel to the side of the mining tool magazine (140) configured to enable access to the at least one mining tool configured to be stored in the mining tool magazine (140).

5. The apparatus (100, 114, 700) according to any preceding claim, wherein the emitted light comprises visible light, infrared light, or ultraviolet light, or wherein a colour of the emitted light is different from a colour of the predetermined portion of the mining tool or the mining vehicle (100).

6. The apparatus (100, 114, 700) according to any preceding claim, wherein the at least one memory (704) and the computer program code (706) are further configured to, with the at least one processor (702), cause the apparatus (100, 114, 700) at least to:
receive the visual data from a camera of the mining vehicle (100).

7. A mining vehicle (100) comprising the apparatus (114, 700) according to any preceding claim.

8. The mining vehicle (100) according to claim 7, further comprising or being configured to hold the mining tool magazine (140).

9. The mining vehicle (100) according to claim 8, wherein the mining tool magazine (140) comprises a light source (146) configured to emit light along a plane at a predetermined reference distance (*d_{ref}*) to the mining tool magazine (140) in front of a side of the mining tool magazine (140) configured to enable access to at least one mining tool configured to be stored in the mining tool magazine (140).

10. The mining vehicle (100) according to claim 9, wherein the emitted light comprises visible light, infrared light, or ultraviolet light, or wherein a colour of the emitted light is different from a colour of a predetermined portion of a mining tool or a mining vehicle (100), wherein the mining vehicle (100) is configured to replace the mining tool with another mining tool configured to be stored in the mining tool magazine (140).

11. The mining vehicle (100) according to claim 9 or 10, wherein the light source (146) comprises a lightshade configured to collimate the light along the plane.

12. The mining vehicle (100) according to any of claims 9 to 11, wherein the plane is substantially parallel to the side of the mining tool magazine (140) configured to enable access to the at least one mining tool configured to be stored in the mining tool magazine (140).

13. A mining tool magazine (140), comprising:
a light source (146) configured to emit light along a plane at a predetermined reference distance (*d_{ref}*) to the mining tool magazine (140) in front of a side of the mining tool magazine (140) configured to enable access to at least one mining tool configured to be stored in the mining tool magazine (140).

14. The mining tool magazine (140) according to claim 13, wherein the emitted light comprises visible light, infrared light, or ultraviolet light, or wherein a colour of the emitted light is different from a colour of a predetermined portion of a mining tool or a mining vehicle (100), wherein the mining vehicle (100) is configured to replace the mining tool with another mining tool configured to be stored in the mining tool magazine (140).

15. The mining tool magazine (140) according to claim 13 or 14, wherein the light source (146) comprises a lightshade configured to collimate the light along the plane.

16. The mining tool magazine (140) according to any of claims 13 to 15, wherein the plane is substantially parallel to the side of the mining tool magazine (140) configured to enable access to the at least one mining tool configured to be stored in the mining tool magazine (140).

17. A computer-implemented method performed by an apparatus (100, 114, 700) for controlling replacement of a mining tool of a mining vehicle (100), the method comprising:
controlling (801) movement of a mining tool of the mining vehicle (100) towards a mining tool magazine (140), wherein a light source (146) is configured to emit light along a plane at a predetermined reference distance (*d_{ref}*) to the mining tool magazine (140);
receiving (802), from a visual sensor (112), visual data comprising a representation of the mining tool;
determining (803) a distance between the mining tool and the mining tool magazine (140) based on detecting, based on the visual data, illumination of a predetermined portion of the mining tool or the mining vehicle (100) by the emitted light;
monitoring (804) the determined distance between the mining tool and the mining tool magazine (140) based on movement of at least one of the mining tool or the mining vehicle (100) with respect to the mining tool magazine (140); and
controlling (805) replacement of at least a distal portion of the mining tool by another mining tool stored in the mining tool magazine (140) based on the monitoring of the distance between the mining tool and the mining tool magazine (140).

18. A computer program comprising instructions which, when executed by an apparatus (100, 114, 700) comprising at least one processor (702), and at least one memory (704), cause the apparatus (100, 114, 700) at least to:
control movement of a mining tool of the mining vehicle (100) towards a mining tool magazine (140), wherein a light source (146) is configured to emit light along a plane at a predetermined reference distance (*d_{ref}*) to the mining tool magazine (140);
receive, from a visual sensor (112), visual data comprising a representation of the mining tool;
determine a distance between the mining tool and the mining tool magazine (140) based on detecting, based on the visual data, illumination of a predetermined portion of the mining tool or the mining vehicle (100) by the emitted light;
monitor the determined distance between the mining tool and the mining tool magazine (140) based on movement of at least one of the mining tool or the mining vehicle (100) with respect to the mining tool magazine (140); and
control replacement of at least a distal portion of the mining tool by another mining tool stored in the mining tool magazine (140) based on the monitoring of the distance between the mining tool and the mining tool magazine (140).

## Patentansprüche

1. Einrichtung (100, 114, 700) zum Steuern eines Austauschs eines Bergbauwerkzeugs eines Bergbaufahrzeugs (100), wobei die Einrichtung (100, 114, 700) umfasst:
mindestens einen Prozessor (702);
und mindestens einen Speicher (704), der einen Computerprogrammcode (706) beinhaltet, wobei der mindestens eine Speicher (704) und der Computercode (706) konfiguriert sind, um mit dem mindestens einen Prozessor (702) die Einrichtung (100, 114, 700) zu veranlassen, mindestens:
eine Bewegung eines Bergbauwerkzeugs des Bergbaufahrzeugs (100) in Richtung eines Bergbauwerkzeugmagazins (140) zu steuern, wobei eine Lichtquelle (146) konfiguriert ist, um Licht entlang einer Ebene in einem vorbestimmten Referenzabstand (*d_{ref}*) zum Bergbauwerkzeugmagazin (140) auszustrahlen;
von einem visuellen Sensor (112) visuelle Daten zu empfangen, die eine Darstellung des Bergbauwerkzeugs umfassen;
einen Abstand zwischen dem Bergbauwerkzeug und dem Bergbauwerkzeugmagazin (140) basierend auf Erkennen, basierend auf den visuellen Daten, einer Beleuchtung eines vorbestimmten Abschnitts des Bergbauwerkzeugs oder des Bergbaufahrzeugs (100) durch das ausgestrahlte Licht zu bestimmen;
den bestimmten Abstand zwischen dem Bergbauwerkzeug und dem Bergbauwerkzeugmagazin (140) basierend auf Bewegung von mindestens einem von dem Bergbauwerkzeug oder dem Bergbaufahrzeug (100) in Bezug auf das Bergbauwerkzeugmagazin (140) zu überwachen; und
Austausch mindestens eines distalen Abschnitts des Bergbauwerkzeugs durch ein anderes im Bergbauwerkzeugmagazin (140) aufbewahrtes Bergbauwerkzeug basierend auf dem Überwachen des Abstands zwischen dem Bergbauwerkzeug und dem Bergbauwerkzeugmagazin (140) zu steuern.

2. Einrichtung (100, 114, 700) nach Anspruch 1, wobei der vorbestimmte Abschnitt des Bergbauwerkzeugs oder des Bergbaufahrzeugs (100) einen distalen Endabschnitt des Bergbauwerkzeugs umfasst, oder wobei der vorbestimmte Abschnitt des Bergbauwerkzeugs oder des Bergbaufahrzeugs (100) einen visuell wiedererkennbaren Abschnitt (138) des Bergbauwerkzeugs oder des Bergbaufahrzeugs (100) umfasst.

3. Einrichtung (100, 114, 700) nach Anspruch 1 oder 2, wobei der mindestens eine Speicher (704) und Computerprogrammcode (706) weiter konfiguriert sind, um mit dem mindestens einen Prozessor (702) die Einrichtung (100, 114, 700) zu veranlassen, die Beleuchtung des vorbestimmten Abschnitts des Bergbauwerkzeugs oder des Bergbaufahrzeugs (100) durch das ausgestrahlte Licht vor einer Seite des Bergbauwerkzeugmagazins (140) zu erkennen, die konfiguriert ist, um Zugriff auf mindestens ein Bergbauwerkzeug zu ermöglichen, das konfiguriert ist, um im Bergbauwerkzeugmagazin (140) aufbewahrt zu werden.

4. Einrichtung (100, 114, 700) nach Anspruch 3, wobei die Ebene im Wesentlichen parallel zur Seite des Bergbauwerkzeugmagazins (140) verläuft, die konfiguriert ist, um Zugriff auf das mindestens eine Bergbauwerkzeug zu ermöglichen, das konfiguriert ist, um im Bergbauwerkzeugmagazin (140) aufbewahrt zu werden.

5. Einrichtung (100, 114, 700) nach einem vorstehenden Anspruch, wobei das ausgestrahlte Licht sichtbares Licht, Infrarotlicht oder Ultraviolettlicht umfasst oder wobei sich eine Farbe des ausgestrahlten Lichts von einer Farbe des vorbestimmten Abschnitts des Bergbauwerkzeugs oder des Bergbaufahrzeugs (100) unterscheidet.

6. Einrichtung (100, 114, 700) nach einem vorstehenden Anspruch, wobei der mindestens eine Speicher (704) und der Computerprogrammcode (706) weiter konfiguriert sind, um mit dem mindestens einen Prozessor (702) die Einrichtung (100, 114, 700) zu veranlassen, mindestens:
die visuellen Daten von einer Kamera des Bergbaufahrzeugs (100) zu empfangen.

7. Bergbaufahrzeug (100), das die Einrichtung (114, 700) nach einem vorstehenden Anspruch umfasst.

8. Bergbaufahrzeug (100) nach Anspruch 7, das weiter das Bergbauwerkzeugmagazin (140) umfasst oder konfiguriert ist, um dieses zu halten.

9. Bergbaufahrzeug (100) nach Anspruch 8, wobei das Bergbauwerkzeugmagazin (140) eine Lichtquelle (146) umfasst, die konfiguriert ist, um Licht entlang einer Ebene in einem vorbestimmten Referenzabstand (*d_{ref}*) zum Bergbauwerkzeugmagazin (140) vor einer Seite des Bergbauwerkzeugmagazins (140) auszustrahlen, das konfiguriert ist, um Zugriff auf mindestens ein Bergbauwerkzeug zu ermöglichen, das konfiguriert ist, um in dem Bergbauwerkzeugmagazin (140) aufbewahrt zu werden.

10. Bergbaufahrzeug (100) nach Anspruch 9, wobei das ausgestrahlte Licht sichtbares Licht, Infrarotlicht oder Ultraviolettlicht umfasst oder wobei sich eine Farbe des ausgestrahlten Lichts von einer Farbe eines vorbestimmten Abschnitts eines Bergbauwerkzeugs oder eines Bergbaufahrzeugs (100) unterscheidet, wobei das Bergbaufahrzeug (100) konfiguriert ist, um das Bergbauwerkzeug gegen ein anderes Bergbauwerkzeug auszutauschen, das konfiguriert ist, um in dem Bergbauwerkzeugmagazin (140) aufbewahrt zu werden.

11. Bergbaufahrzeug (100) nach Anspruch 9 oder 10, wobei die Lichtquelle (146) einen Lichtschirm umfasst, der konfiguriert ist, um das Licht entlang der Ebene zu kollimieren.

12. Bergbaufahrzeug (100) nach einem der Ansprüche 9 bis 11, wobei die Ebene im Wesentlichen parallel zur Seite des Bergbauwerkzeugmagazins (140) verläuft, die konfiguriert ist, um Zugriff auf das mindestens eine Bergbauwerkzeug zu ermöglichen, das konfiguriert ist, um im Bergbauwerkzeugmagazin (140) aufbewahrt zu werden.

13. Bergbauwerkzeugmagazin (140), umfassend:
eine Lichtquelle (146), die konfiguriert ist, um Licht entlang einer Ebene in einem vorbestimmten Referenzabstand (*d_{ref}*) zum Bergbauwerkzeugmagazin (140) vor einer Seite des Bergbauwerkzeugmagazins (140) auszustrahlen, das konfiguriert ist, um Zugriff auf mindestens ein Bergbauwerkzeug zu ermöglichen, das konfiguriert ist, um in dem Bergbauwerkzeugmagazin (140) aufbewahrt zu werden.

14. Bergbauwerkzeugmagazin (140) nach Anspruch 13, wobei das ausgestrahlte Licht sichtbares Licht, Infrarotlicht oder Ultraviolettlicht umfasst oder wobei sich eine Farbe des ausgestrahlten Lichts von einer Farbe eines vorbestimmten Abschnitts eines Bergbauwerkzeugs oder eines Bergbaufahrzeugs (100) unterscheidet, wobei das Bergbaufahrzeug (100) konfiguriert ist, um das Bergbauwerkzeug gegen ein anderes Bergbauwerkzeug auszutauschen, das konfiguriert ist, um in dem Bergbauwerkzeugmagazin (140) aufbewahrt zu werden.

15. Bergbauwerkzeugmagazin (140) nach Anspruch 13 oder 14, wobei die Lichtquelle (146) einen Lichtschirm umfasst, der konfiguriert ist, um das Licht entlang der Ebene zu kollimieren.

16. Bergbauwerkzeugmagazin (140) nach einem der Ansprüche 13 bis 15, wobei die Ebene im Wesentlichen parallel zur Seite des Bergbauwerkzeugmagazins (140) verläuft, die konfiguriert ist, um Zugriff auf das mindestens eine Bergbauwerkzeug zu ermöglichen, das konfiguriert ist, um im Bergbauwerkzeugmagazin (140) aufbewahrt zu werden.

17. Computerimplementiertes Verfahren, das von einer Einrichtung (100, 114, 700) durchgeführt wird, um Austausch eines Bergbauwerkzeugs eines Bergbaufahrzeugs (100) zu steuern, wobei das Verfahren umfasst:
Steuern (801) einer Bewegung eines Bergbauwerkzeugs des Bergbaufahrzeugs (100) in Richtung eines Bergbauwerkzeugmagazins (140), wobei eine Lichtquelle (146) konfiguriert ist, um Licht entlang einer Ebene in einem vorbestimmten Referenzabstand (*d_{ref}*) zum Bergbauwerkzeugmagazin (140) auszustrahlen;
Empfangen (802) von einem visuellen Sensor (112) von visuellen Daten, die eine Darstellung des Bergbauwerkzeugs umfassen;
Bestimmen (803) eines Abstands zwischen dem Bergbauwerkzeug und dem Bergbauwerkzeugmagazin (140) basierend auf Erkennen, basierend auf den visuellen Daten, einer Beleuchtung eines vorbestimmten Abschnitts des Bergbauwerkzeugs oder des Bergbaufahrzeugs (100) durch das ausgestrahlte Licht;
Überwachen (804) des bestimmten Abstands zwischen dem Bergbauwerkzeug und dem Bergbauwerkzeugmagazin (140) basierend auf Bewegung von mindestens einem von dem Bergbauwerkzeug oder dem Bergbaufahrzeug (100) in Bezug auf das Bergbauwerkzeugmagazin (140); und
Steuern (805) eines Austauschs mindestens eines distalen Abschnitts des Bergbauwerkzeugs durch ein anderes im Bergbauwerkzeugmagazin (140) aufbewahrtes Bergbauwerkzeug basierend auf der Überwachung des Abstands zwischen dem Bergbauwerkzeug und dem Bergbauwerkzeugmagazin (140).

18. Computerprogramm, das Anweisungen umfasst, die, wenn sie von einer Einrichtung (100, 114, 700), die mindestens einen Prozessor (702) und mindestens einen Speicher (704) umfasst, ausgeführt werden, die Einrichtung (100, 114, 700) mindestens veranlassen:
eine Bewegung eines Bergbauwerkzeugs des Bergbaufahrzeugs (100) in Richtung eines Bergbauwerkzeugmagazins (140) zu steuern, wobei eine Lichtquelle (146) konfiguriert ist, um Licht entlang einer Ebene in einem vorbestimmten Referenzabstand (*d_{ref}*) zum Bergbauwerkzeugmagazin (140) auszustrahlen;
von einem visuellen Sensor (112) visuelle Daten zu empfangen, die eine Darstellung des Bergbauwerkzeugs umfassen;
einen Abstand zwischen dem Bergbauwerkzeug und dem Bergbauwerkzeugmagazin (140) basierend auf Erkennen, basierend auf den visuellen Daten, einer Beleuchtung eines vorbestimmten Abschnitts des Bergbauwerkzeugs oder des Bergbaufahrzeugs (100) durch das ausgestrahlte Licht zu bestimmen;
den bestimmten Abstand zwischen dem Bergbauwerkzeug und dem Bergbauwerkzeugmagazin (140) basierend auf Bewegung von mindestens einem von dem Bergbauwerkzeug oder dem Bergbaufahrzeug (100) in Bezug auf das Bergbauwerkzeugmagazin (140) zu überwachen; und
Austausch mindestens eines distalen Abschnitts des Bergbauwerkzeugs durch ein anderes im Bergbauwerkzeugmagazin (140) aufbewahrtes Bergbauwerkzeug basierend auf dem Überwachen des Abstands zwischen dem Bergbauwerkzeug und dem Bergbauwerkzeugmagazin (140) zu steuern.

## Revendications

1. Appareil (100, 114, 700) permettant de commander le remplacement d'un outil d'exploitation minière d'un véhicule d'exploitation minière (100), l'appareil (100, 114, 700) comprenant :
au moins un processeur (702) ;
et au moins une mémoire (704) incluant un code de programme informatique (706), la au moins une mémoire (704) et le code de programme informatique (706) étant configurés, avec le au moins un processeur (702), pour amener l'appareil (100, 114, 700) au moins à :
commander le mouvement d'un outil d'exploitation minière du véhicule d'exploitation minière (100) vers un magasin (140) d'outils d'exploitation minière, dans lequel une source de lumière (146) est configurée pour émettre de la lumière le long d'un plan à une distance de référence prédéterminée (*d_{ref}*) par rapport au magasin (140) d'outils d'exploitation minière ;
recevoir, à partir d'un capteur visuel (112), des données visuelles comprenant une représentation de l'outil d'exploitation minière ;
déterminer une distance entre l'outil d'exploitation minière et le magasin (140) d'outils d'exploitation minière sur la base de la détection, en fonction des données visuelles, de l'éclairage d'une partie prédéterminée de l'outil d'exploitation minière ou du véhicule d'exploitation minière (100) par la lumière émise ;
surveiller la distance déterminée entre l'outil d'exploitation minière et le magasin (140) d'outils d'exploitation minière sur la base du mouvement d'au moins l'un de l'outil d'exploitation minière ou du véhicule d'exploitation minière (100) par rapport au magasin (140) d'outils d'exploitation minière ; et
commander le remplacement d'au moins une partie distale de l'outil d'exploitation minière par un autre outil d'exploitation minière stocké dans le magasin (140) d'outils d'exploitation minière sur la base de la surveillance de la distance entre l'outil d'exploitation minière et le magasin (140) d'outils d'exploitation minière.

2. Appareil (100, 114, 700) selon la revendication 1, dans lequel la partie prédéterminée de l'outil d'exploitation minière ou du véhicule d'exploitation minière (100) comprend une partie d'extrémité distale de l'outil d'exploitation minière ou dans lequel la partie prédéterminée de l'outil d'exploitation minière ou du véhicule d'exploitation minière (100) comprend une partie visuellement reconnaissable (138) de l'outil d'exploitation minière ou du véhicule d'exploitation minière (100).

3. Appareil (100, 114, 700) selon la revendication 1 ou 2, dans lequel la au moins une mémoire (704) et le code de programme informatique (706) sont en outre configurés, avec le au moins un processeur (702), pour amener l'appareil (100, 114, 700) à détecter l'éclairage de la partie prédéterminée de l'outil d'exploitation minière ou du véhicule d'exploitation minière (100) par la lumière émise devant un côté du magasin (140) d'outils d'exploitation minière configuré pour permettre l'accès à au moins un outil d'exploitation minière configuré pour être stocké dans le magasin (140) d'outils d'exploitation minière.

4. Appareil (100, 114, 700) selon la revendication 3, dans lequel le plan est sensiblement parallèle au côté du magasin (140) d'outils d'exploitation minière configuré pour permettre l'accès au au moins un outil d'exploitation minière configuré pour être stocké dans le magasin (140) d'outils d'exploitation minière.

5. Appareil (100, 114, 700) selon une quelconque revendication précédente, dans lequel la lumière émise comprend une lumière visible, une lumière infrarouge ou une lumière ultraviolette, ou dans lequel une couleur de la lumière émise est différente d'une couleur de la partie prédéterminée de l'outil d'exploitation minière ou du véhicule d'exploitation minière (100).

6. Appareil (100, 114, 700) selon une quelconque revendication précédente, dans lequel la au moins une mémoire (704) et le code de programme informatique (706) sont en outre configurés, avec le au moins un processeur (702), pour amener l'appareil (100, 114, 700) au moins à :
recevoir les données visuelles d'une caméra du véhicule d'exploitation minière (100).

7. Véhicule d'exploitation minière (100) comprenant l'appareil (114, 700) selon une quelconque revendication précédente.

8. Véhicule d'exploitation minière (100) selon la revendication 7, comprenant en outre ou étant configuré pour contenir le magasin (140) d'outils d'exploitation minière.

9. Véhicule d'exploitation minière (100) selon la revendication 8, dans lequel le magasin (140) d'outils d'exploitation minière comprend une source de lumière (146) configurée pour émettre de la lumière le long d'un plan à une distance de référence prédéterminée (*d_{ref}*) par rapport au magasin (140) d'outils d'exploitation minière devant un côté du magasin (140) d'outils d'exploitation minière configuré pour permettre l'accès à au moins un outil d'exploitation minière configuré pour être stocké dans le magasin (140) d'outils d'exploitation minière.

10. Véhicule d'exploitation minière (100) selon la revendication 9, dans lequel la lumière émise comprend une lumière visible, une lumière infrarouge ou une lumière ultraviolette, ou dans lequel une couleur de la lumière émise est différente d'une couleur d'une partie prédéterminée d'un outil d'exploitation minière ou d'un véhicule d'exploitation minière (100), dans lequel le véhicule d'exploitation minière (100) est configuré pour remplacer l'outil d'exploitation minière par un autre outil d'exploitation minière configuré pour être stocké dans le magasin (140) d'outils d'exploitation minière.

11. Véhicule d'exploitation minière (100) selon la revendication 9 ou 10, dans lequel la source de lumière (146) comprend un cache configuré pour collimater la lumière le long du plan.

12. Véhicule d'exploitation minière (100) selon l'une quelconque des revendications 9 à 11, dans lequel le plan est sensiblement parallèle au côté du magasin (140) d'outils d'exploitation minière configuré pour permettre l'accès au au moins un outil d'exploitation minière configuré pour être stocké dans le magasin (140) d'outils d'exploitation minière.

13. Magasin (140) d'outils d'exploitation minière comprenant :
une source de lumière (146) configurée pour émettre de la lumière le long d'un plan à une distance de référence prédéterminée (*d_{ref}*) par rapport au magasin (140) d'outils d'exploitation minière devant un côté du magasin (140) d'outils d'exploitation minière configuré pour permettre l'accès à au moins un outil d'exploitation minière configuré pour être stocké dans le magasin (140) d'outils d'exploitation minière.

14. Magasin (140) d'outils d'exploitation minière selon la revendication 13, dans lequel la lumière émise comprend une lumière visible, une lumière infrarouge ou une lumière ultraviolette, ou dans lequel une couleur de la lumière émise est différente d'une couleur d'une partie prédéterminée d'un outil d'exploitation minière ou d'un véhicule d'exploitation minière (100), dans lequel le véhicule d'exploitation minière (100) est configuré pour remplacer l'outil d'exploitation minière par un autre outil d'exploitation minière configuré pour être stocké dans le magasin (140) d'outils d'exploitation minière.

15. Magasin (140) d'outils d'exploitation minière selon la revendication 13 ou 14, dans lequel la source de lumière (146) comprend un cache configuré pour collimater la lumière le long du plan.

16. Magasin (140) d'outils d'exploitation minière selon l'une quelconque des revendications 13 à 15, dans lequel le plan est sensiblement parallèle au côté du magasin (140) d'outils d'exploitation minière configuré pour permettre l'accès au au moins un outil d'exploitation minière configuré pour être stocké dans le magasin (140) d'outils d'exploitation minière.

17. Procédé mis en œuvre par ordinateur exécuté par un appareil (100, 114, 700) pour commander le remplacement d'un outil d'exploitation minière d'un véhicule d'exploitation minière (100), le procédé comprenant :
la commande (801) du mouvement d'un outil d'exploitation minière du véhicule d'exploitation minière (100) vers un magasin (140) d'outils d'exploitation minière, dans lequel une source de lumière (146) est configurée pour émettre de la lumière le long d'un plan à une distance de référence prédéterminée (*d_{ref}*) par rapport au magasin (140) d'outils d'exploitation minière ;
la réception (802), à partir d'un capteur visuel (112), de données visuelles comprenant une représentation de l'outil d'exploitation minière ;
la détermination (803) d'une distance entre l'outil d'exploitation minière et le magasin (140) d'outils d'exploitation minière sur la base de la détection, en fonction des données visuelles, de l'éclairage d'une partie prédéterminée de l'outil d'exploitation minière ou du véhicule d'exploitation minière (100) par la lumière émise ;
la surveillance (804) de la distance déterminée entre l'outil d'exploitation minière et le magasin (140) d'outils d'exploitation minière sur la base du mouvement d'au moins l'un de l'outil d'exploitation minière ou du véhicule d'exploitation minière (100) par rapport au magasin (140) d'outils d'exploitation minière ; et
la commande (805) du remplacement d'au moins une partie distale de l'outil d'exploitation minière par un autre outil d'exploitation minière stocké dans le magasin (140) d'outils d'exploitation minière sur la base de la surveillance de la distance entre l'outil d'exploitation minière et le magasin (140) d'outils d'exploitation minière.

18. Programme informatique comprenant des instructions qui, lorsqu'elles sont exécutées par un appareil (100, 114, 700) comprenant au moins un processeur (702) et au moins une mémoire (704), amènent l'appareil (100, 114, 700) au moins à :
commander le mouvement d'un outil d'exploitation minière du véhicule d'exploitation minière (100) vers un magasin (140) d'outils d'exploitation minière, dans lequel une source de lumière (146) est configurée pour émettre de la lumière le long d'un plan à une distance de référence prédéterminée (*d_{ref}*) par rapport au magasin (140) d'outils d'exploitation minière ;
recevoir, à partir d'un capteur visuel (112), des données visuelles comprenant une représentation de l'outil d'exploitation minière ;
déterminer une distance entre l'outil d'exploitation minière et le magasin (140) d'outils d'exploitation minière sur la base de la détection, en fonction des données visuelles, de l'éclairage d'une partie prédéterminée de l'outil d'exploitation minière ou du véhicule d'exploitation minière (100) par la lumière émise ;
surveiller la distance déterminée entre l'outil d'exploitation minière et le magasin (140) d'outils d'exploitation minière sur la base du mouvement d'au moins l'un de l'outil d'exploitation minière ou du véhicule d'exploitation minière (100) par rapport au magasin (140) d'outils d'exploitation minière ; et
commander le remplacement d'au moins une partie distale de l'outil d'exploitation minière par un autre outil d'exploitation minière stocké dans le magasin (140) d'outils d'exploitation minière sur la base de la surveillance de la distance entre l'outil d'exploitation minière et le magasin (140) d'outils d'exploitation minière.
